Europäisches Patentamt

European Patent Office

Office européen des brevets

(11) Veröffentlichungsnummer: **0 376 421**
**A1**

(12) **EUROPÄISCHE PATENTANMELDUNG**

(21) Anmeldenummer: 89250123.0

(22) Anmeldetag: 20.12.89

(51) Int. Cl.5: **B65G 39/071, B65G 13/07**

(30) Priorität: 29.12.88 DE 3844448

(43) Veröffentlichungstag der Anmeldung:
04.07.90 Patentblatt 90/27

(84) Benannte Vertragsstaaten:
AT BE CH DE ES FR GB IT LI LU NL SE

(71) Anmelder: MANNESMANN Aktiengesellschaft
Mannesmannufer 2
D-4000 Düsseldorf 1(DE)

(72) Erfinder: Kratz, Helmut
Mainzer Strasse 6
D-6054 Rodgau 2(DE)

(74) Vertreter: Meissner, Peter E., Dipl.-Ing. et al
Patentanwaltsbüro Meissner & Meissner,
Herbertstrasse 22
D-1000 Berlin 33(DE)

(54) Führungsrolle für einen Antriebsgurt einer Rollenförderbahn.

(57) Die Erfindung betrifft eine Führungsrolle mit einer Lauffläche für einen Antriebsgurt einer Rollenförderbahn. Um eine Führungsrolle so zu gestalten, daß auch eine einfacher Flachriemen bei langer Lebensdauer verwendet werdenkann, wird vorgeschlagen, daß die Lauffläche (2) von den Rändern der Führungsrolle (1) zur Längsmitte führende Tragrippen (3) für den als Flachriemen ausgebildeten Antriebsgurt (8) hat.

# Fig.1

## Führungsrolle für einen Antriebsgurt einer Rollenförderbahn

Die Erfindung betrifft eine Führungsrolle mit einer Lauffläche für einen Antriebsgurt einer Rollenförderbahn.

Derartige Führungsrollen sind durch die DE-PS 27 14 862 als schmale Rollen bekannt und haben an den Seiten Führungsränder für eine mittige Führungsrippe des Antriebsgurtes, der durch die Führungsrippe unnötig teuer wird. Die Führungsrippe ist keilförmig und gleitet an den Rändern entlang, so daß dabei Pfeifgeräusche entstehen. Würde man die mittlere Führungsrippe des Antriebsgurtes entfallen lassen und die Führungsrolle mit Führungsrändern für den Antriebsgurt versehen, dann würde dieser an den Führungsrändern entlanggleiten und dabei beschädigt.

Aufgabe der Erfindung ist es daher, eine Führungsrolle so zu gestalten, daß auch ein einfacher Flachriemen bei langer Lebensdauer verwendet werden kann. Diese Aufgabe wird dadurch gelöst, daß die Lauffläche von den Rändern der Führungsrolle zur Längsmitte führende Tragrippen für den als Flachriemen ausgebildeten Antriebsgurt hat. Die Tragrippen sind entgegengerichtete Steigungen nach Art eines eingängigen Gewindes und führen den Antriebsgurt immer zur Mitte der Lauffläche der Führungsrolle hin. Selbst wenn die Rollenförderbahn in einzelnen Abschnitten etwas zueinander versetzt ist, läuft der Antriebsgurt über die Mitte der Führungsrolle, die in ihrer Längsmitte eine einfache umlaufende Tragrippe mit danebenliegender Rille hat, in der die Gewindetäler der Gewinde-Tragrippen enden.

In weiterer Ausgestaltung der Erfindung sind die Spitzen und Täler der Tragrippen gerundet und die Lauffläche ist nach Art einer üblichen Riemenscheibe etwas ballig gewölbt. An der Führungsrolle vorhandene Leitränder verhindern ein Ablaufen des Antriebsgurtes bei übermäßig starken Kurven einer Rollenförderbahn.

Ein Ausführungsbeispiel der Erfindung ist in der Zeichnung dargestellt und im folgenden erläutert. Es zeigen

Fig. 1 eine Führungsrolle in der Seitenansicht mit Antriebsgurt,

Fig. 2 eine Stirnansicht der Führungsrolle,

Fig. 3 einen Schnitt durch die Führungsrolle ohne Tragrippen,

Fig. 4 die Oberfläche der Tragrippen im größeren Maßstab.

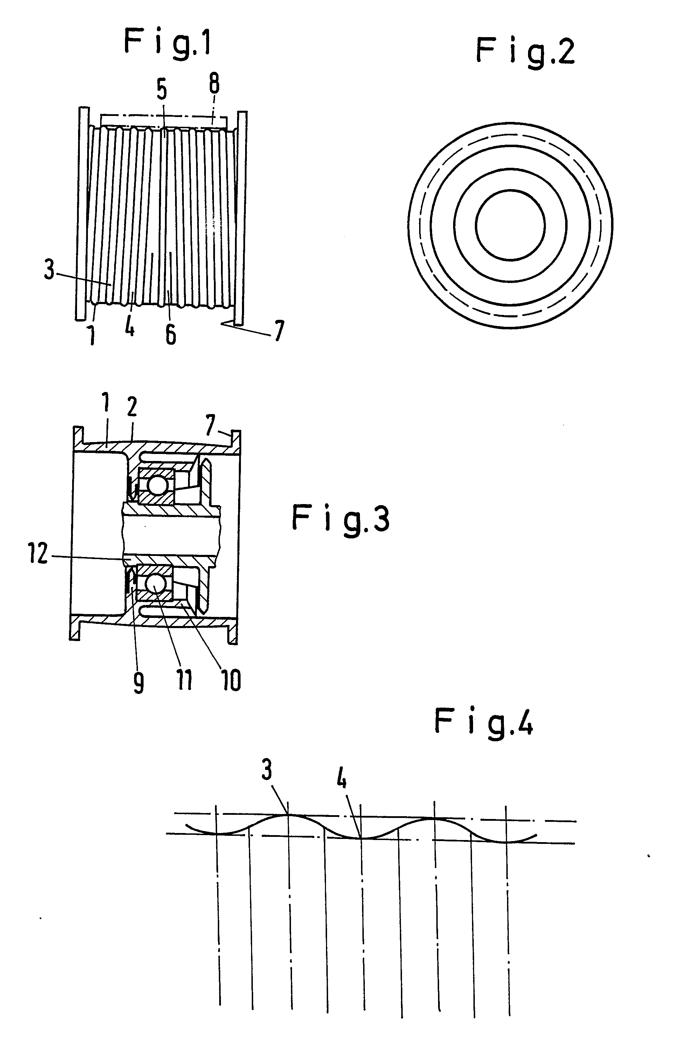

Die Lauffläche 2 der Führungsrolle 1 ist ballig ausgeführt, vie in Fig. 3 dargestellt, wobei der Wölbungsradius etwa den zehnfachen Durchmesser der Führungsrolle beträgt.

Fig. 1 zeigt die Anordnung der gewindeförmigen Tragrippen 3 und der mittleren umlaufenden Tragrippe 5. Die Gewindetäler 4 beginnen neben den Leiträndern 7 und bilden zusammen mit den Tragrippen 3 eingängige Gewinde, wobei die Gewindetäler 4 in Rillen 6 zu beiden Seiten der mittleren Tragrippe 5 einmünden.

Fig. 4 zeigt im größeren Maßstab, daß die Spitzen der Tragrippen 3 und die dazwischenliegenden Täler als Rundungen ineinander übergehen, so daß einerseits keine scharfkantigen Spitzen den Antriebsgurt 8 beschädigen können und andererseits die Gewindetäler 4 keine scharfkantigen Kanten zum Bilden von Spannungsspitzen haben, die die aus hartem Kunststoff, wie z.B. Polyamid, hergestellte Führungsrolle 1 gefährden könnten. Diese hat im Inneren einen Führungsring 9 als Anschlag für ein Wälzlager 11, das mittels eines Ringwulstes 10 in der Führungsrolle 1 gehalten ist. Das Wälzlager 11 ist auf einer Buchse 12 gelagert, die über einen nicht gezeichneten Stehbolzen an der Rollenförderbahn befestigt ist.

## Ansprüche

1. Führungsrolle mit einer Lauffläche für einen Antriebsgurt einer Rollenförderbahn, dadurch gekennzeichnet, daß die Lauffläche (2) von den Rändern der Führungsrolle (1) zur Längsmitte führende Tragrippen (3) mit entgegengerichteten Steigungen nach Art eines eingängigen Gewindes hat, deren Gewindetäler in einer sich in der Längsmitte über den ganzen Umfang erstreckenden Rille (6) der balligen Führungsrolle einmünden.

2. Führungsrolle nach Anspruch 1, dadurch gekennzeichnet, daß die Spitzen der Tragrippen (3) gerundet sind.

3. Führungsrolle nach einem oder mehreren der vorgenannten Ansprüche, dadurch gekennzeichnet, daß die Täler (4) zwischen den Tragrippen (3) gerundet sind.

4. Führungsrolle nach einem oder mehreren der vorgenannten Ansprüche, dadurch gekennzeichnet, daß die Steigung ca. 3,5 mm und die Gewindetiefe ca. 0,5 mm beträgt.

5. Führungsrolle nach einem oder mehreren der vorgenannten Ansprüche, dadurch gekennzeichnet, daß die Lauffläche (2) ballig gewölbt ist.

6. Führungsrolle nach einem oder mehreren der vorgenannten Ansprüche, dadurch gekennzeichnet, daß die Führungsrolle (1) zur seitlichen Begrenzung der Lauffläche (2) Leitränder (7) hat.

7. Führungsrolle nach einem oder mehreren der vorgenannten Ansprüche,
dadurch gekennzeichnet,
daß die Führungsrolle (1) aus hartem Kunststoff hergestellt ist.

# Fig.1

# Fig.2

# Fig.3

# Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A- 765 003 (UNITED STATES STEEL CORP.) * Seite 1, Zeile 84 - Seite 2, Zeile 10; Figur 2 * | 1 | B 65 G 39/071 B 65 G 13/07 |
| Y | GB-A- 709 908 (UNITED STATES STEEL CORP.) * Seite 1, Zeilen 12-84; Seite 2, Zeilen 8-32; Figur 1 * | 1 | |
| A | | 5 | |
| Y | US-A-3 643 791 (G.W. THORNSBERY) * Spalte 1, Zeilen 21-38; Figuren 2,3 * | 1 | |
| A | GB-A- 910 804 (WHITTINGTON ENGINEERING COMP.) * Seite 1, Zeilen 11-43; Figuren 1,2 * | 1,2 | |
| A | US-A-1 095 445 (J.A. ALVEY) * Seite 1, Zeilen 76-97; Figuren 1-4 * | 1,2 | |
| A | US-A-3 605 991 (H.S. BURT et al.) * Spalte 4, Zeilen 31-33; Figur 3 * | 1,6 | **RECHERCHIERTE SACHGEBIETE (Int. Cl.5)** B 65 G |
| D,A | DE-C-2 714 862 (DEMAG AG) * Spalte 3, Zeilen 18-22; Figur 1 * ----- | 1 | |

Der vorliegende Recherchenbericht wurde für alle Patentansprüche erstellt

| Recherchenort | Abschlußdatum der Recherche | Prüfer |
|---|---|---|
| BERLIN | 26-03-1990 | SIMON J J P |